# EUROPEAN PATENT SPECIFICATION

(11) **EP 3 864 212 B1**
(45) Date of publication and mention of the grant of the patent: **03.01.2024**
(21) Application number: 19761839.0
(22) Date of filing: 29.08.2019
(51) Int. Cl.: D06F 37/22, F16F 9/32, D06F 34/18, D06F 25/00

(54) **A LAUNDRY WASHER-DRYER FOR DETECTING THE AMOUNT OF LOAD**
WASCHTROCKNER ZUR ERFASSUNG DER LASTMENGE
MACHINE À LAVER SÈCHE-LINGE CONÇUE POUR DÉTECTER LA CHARGE

(30) Priority: 10.10.2018 TR 201814912
(43) Date of publication of application: 18.08.2021
(73) Proprietor: Arçelik Anonim Sirketi, 34445 Istanbul (TR)
(72) Inventor: KANDEMIR, Nihat, 34950 Istanbul (TR); KANTAS, Murat, 34950 Istanbul (TR); ARSAN, Ismet, 34950 Istanbul (TR); KAYA, Sinan, 34950 Istanbul (TR)
(86) International application number: PCT/EP2019/073042
(87) International publication number: WO 2020/074177

(56) References cited:
- EP-A1- 0 972 874
- EP-A1- 2 372 184
- US-B2- 7 530 243

## Description

The present invention relates to a laundry washer-dryer wherein a sensor unit which detects the laundry load is integrated with the shock absorber which absorbs the vibrations of the tub.

In laundry washer-dryers, the detection of laundry load is critical for the user to see the weight of the load, and for preventing excessive loading, executing quarter or half load programs in case of low load, increasing the washing performance of the machine, decreasing energy consumption and detecting unbalanced loads which may occur in the machine. In the laundry washer-dryers, the load can be most correctly detected via the shock absorber which absorbs the vibrations of the tub. Therefore, shock absorbers with load sensors are used in the laundry washer-dryers; however, the cost of the shock absorbers produced with load sensors is high.

The Patent No. EP2372184 (B1) relates to a displacement sensor integrated with the shock absorber in a household appliance.

The Patent No. EP0972874 (A1) relates to a washing machine having sensing means that detects displacement of tub.

The aim of the present invention is the realization of a laundry washer-dryer comprising a sensor unit which can be detachably mounted to a shock absorber in order to detect the amount of laundry loaded and unbalanced load which may occur during operation.

The laundry washer-dryer realized in order to attain the aim of the present invention is defined by independent claim 1.

The laundry washer-dryer realized in order to attain the aim of the present invention is illustrated in the attached figures, where:

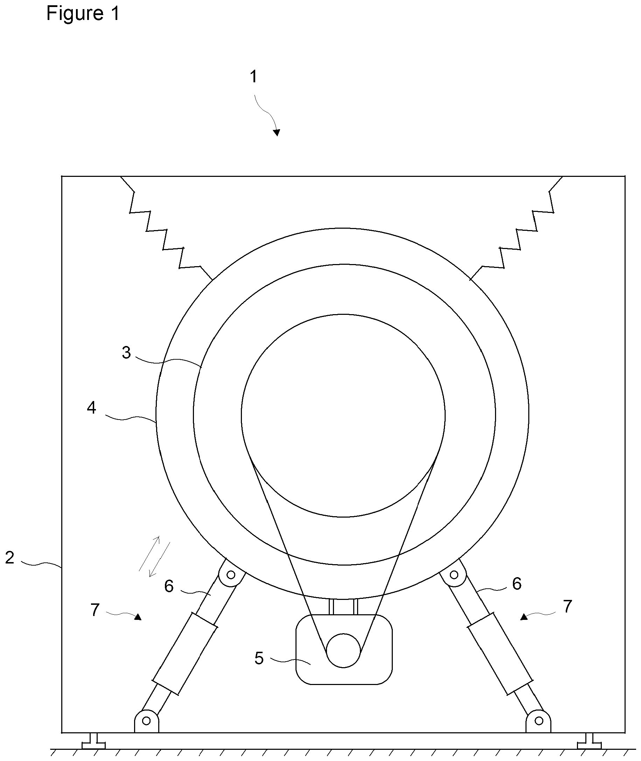

Figure 1 - is the schematic view of a laundry washer-dryer.

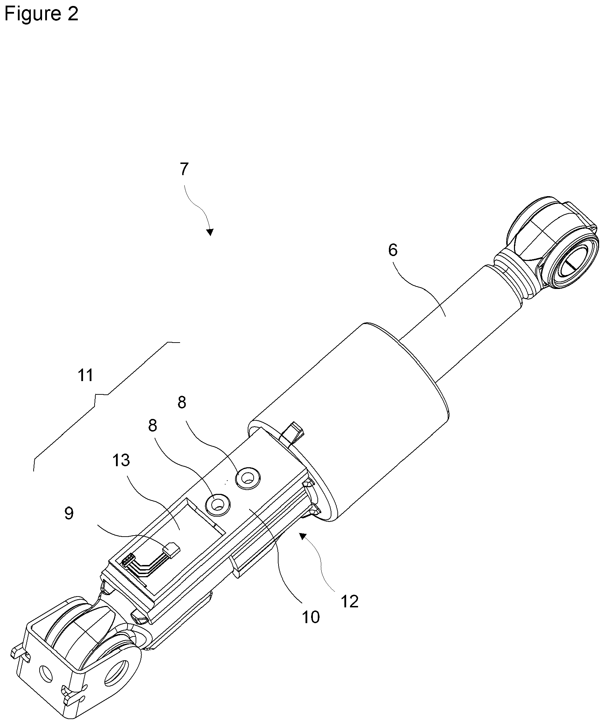

Figure 2 - is the perspective view of a shock absorber with a sensor unit mounted thereon.

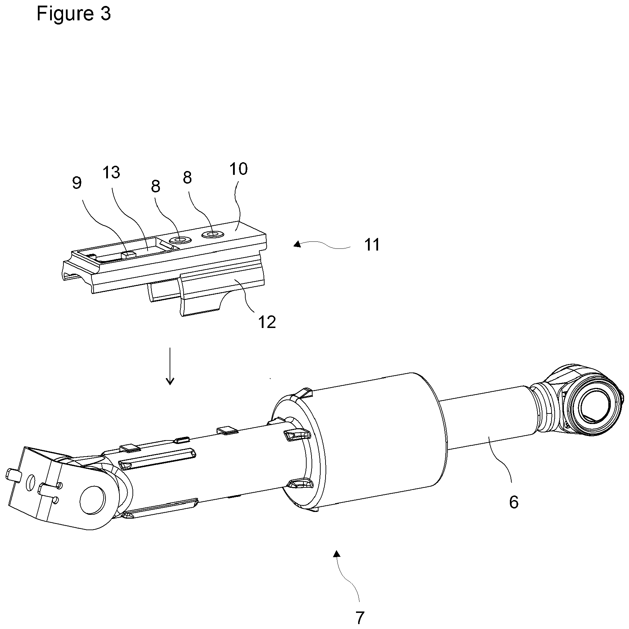

Figure 3 - is the exploded view of a sensor unit and a shock absorber.
Figure 4 - is the cross-sectional view of a shock absorber with a sensor unit mounted thereon.

The elements illustrated in the figures are numbered as follows:
1. Laundry washer-dryer
2. Body
3. Drum
4. Tub
5. Motor
6. Piston
7. Shock absorber
8. Magnet
9. Magnetic sensor
10. Casing
11. Sensor unit
12. Claw
13. Electronic card
14. Flux barrier

### E: Axis

The laundry washer-dryer (1) comprises a body (2) or a chassis; a drum (3) wherein the laundry is loaded; a tub (4) which makes vibrational motion during operation with the effect of the drum (3); a motor (5) which is fixed to the tub (4) and which drives the drum (3); wherein the motor (5) and the tub (4) form a tub-motor group; and at least one shock absorber (7) comprising a piston (6) which is at least partially produced from magnetic material and which is connected to the tub (4) or the body (2) from one end; and at least one shock absorber (7) which absorbs the vibrational motion of the tub (4)-motor (5) group and wherein the piston (6) moves coaxially.

The laundry washer-dryer (1) of the present invention comprises
- at least one magnet (8) which is positioned on the shock absorber (7) parallel to the movement axis (E) of the piston (6),
- a magnetic sensor (9), for example "Hall sensor", which detects the magnetic field intensity variations occurring between the piston (6) and the magnet (8) depending on the movement of the piston (6) in the shock absorber (7), and
- a modular displacement sensor unit (11), "sensor unit (11)" in short, having a casing (10) which supports the magnet (8) and the magnetic sensor (9) and which enables the magnet (8) and the magnetic sensor (9) to be detachably mounted onto the cylindrical outer surface of the shock absorber (7) as a single piece.

The displacement of the piston (6) in the shock absorber (7) is directly related to the weight loaded. In the laundry washer-dryer (1), the laundry loaded into the drum (3) causes the piston (6) to displace in the linear direction (in the axial (E) direction) in the shock absorber (7). The magnetic sensor (9) provided in the sensor unit (11) detects the magnetic field variations occurring depending on the movement of the piston (6) in the shock absorber (7). By detecting the position of the piston (6) in the shock absorber (7), the amount of laundry load and unbalanced load can be determined. The control unit (not shown in figures) detects the amount of load and unbalanced load in the tub (4) based on the displacement data received from the sensor unit (11), and thus regulates the washing-drying programs according to the laundry load.

In an embodiment of the present invention, the sensor unit (11) is detachably mounted onto the cylindrical lateral surface of the shock absorber (7) by means of arc-shaped claws (12) provided on the casing (10). In this embodiment, the sensor unit (11) can be detachably mounted to the shock absorber (7), which is connected to the tub (4) and the body (2) from both ends, perpendicularly to the axis (E) without detaching the shock absorber (7) from the tub (4) and the body (2). When the shock absorber (7) is replaced or in case of processes such as adjustment, calibration, etc., the sensor unit (11) can be easily detachably mounted to the shock absorber (7) as a single piece together with the casing (10) and the magnetic sensor (9) and the magnets (8) thereon, and can be adapted to various types or brands of shock absorbers (7).

In an embodiment of the present invention, the sensor unit (11) comprises an electronic card (13), for example a printed circuit board (PCB), which controls the magnetic sensor (9). The magnetic sensor (9) and/or the magnet (8) is fixed onto the electronic card (13), and the electronic card (13) together with the magnetic sensor (9) and/or the magnet (8) thereon is placed into the casing (10).

The magnetic field variations measured by the magnetic sensor (9) are monitored by the electronic card (13) or a processor on the control unit of the laundry washer-dryer (1). The amount of load is determined based on the measured magnetic field variation, and this data is used during the washing process when needed. Similarly, said data can be used to detect unbalanced load in washing, spin-drying and drying steps. The load data determined by the sensor unit (11) can be used to monitor the drying performance in the drying step of the laundry washer-dryer (1). By comparing the weight at the beginning of the drying program and the weight reached at the end of the drying process, the drying performance can be determined.

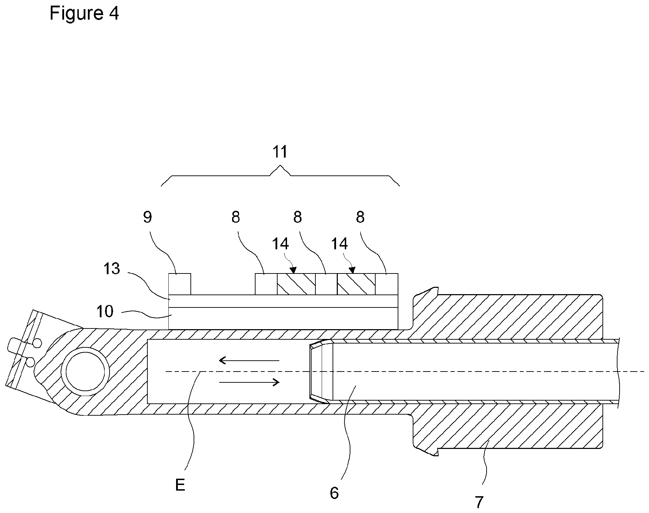

In an embodiment of the present invention, the sensor unit (11) comprises a plurality of magnets (8) which are placed onto the casing (10) in a successive and discrete manner parallel to the movement axis (E) of the piston (6) (Figure 4).

In another embodiment of the present invention, the magnets (8) which are successively arranged on the casing (10) at equal intervals have the same dimensions and magnetic force. The magnetic sensor (9) detects the distance covered by the piston (6) based on the number of magnets (8) the piston (6) passes by while moving.

In another embodiment of the present invention, the sensor unit (11) comprises the magnets (8) with same dimensions and different magnetic forces, which are arranged on the casing (10) at equal intervals. According to the magnetic flux intensity detected from the piston (6) moving along the axis (E) parallel to the magnets (8), it is detected with which magnet (8) the piston (6) is aligned.

In another embodiment of the present invention, the sensor unit (11) comprises the magnets (8) with different dimensions which are arranged at equal intervals. Since the magnetic field intensity around each magnet (8) is different, it can be detected with which magnet (8) the piston (6) is aligned.

In another embodiment of the present invention, the sensor unit (11) comprises the magnets (8) with same dimensions which are arranged at varying intervals. Since the magnetic field intensity around each gap between the magnets (8) is different, it can be detected with which gap the piston (6) is aligned.

In another embodiment of the present invention, the sensor unit (11) comprises at least one flux barrier (14) which is produced from non-magnetic material, for example plastic, and which is placed into the gaps between the magnets (8) arranged on the casing (10).

In the laundry washer-dryer (1), by means of the sensor unit (11) which can be easily detachably mounted to a standard shock absorber (7), the amount of laundry being washed or dried and the unbalanced load occurring in the drum (3) during operation can be detected.

## Claims

1. - A laundry washer-dryer (1) **comprising** a body (2); a drum (3) wherein the laundry is loaded; a tub (4) which is configured to make vibrational motion during operation with the effect of the drum (3); a motor (5) which is fixed to the tub (4) and which is configured to drive the drum (3); wherein the motor (5) and the tub (4) form a tub-motor groups and at least one shock absorber (7) comprising a piston (6) which is at least partially produced from magnetic material and which is connected to the tub (4) or the body (2) from one end wherein the shock absorber (7) is configured to absorb the vibrational motion of the tub (4)-motor (5) group and wherein the piston (6) is configured to move coaxially, **characterized by**
- at least one magnet (8) which is positioned on the shock absorber (7) parallel to the movement axis (E) of the piston (6),
- a magnetic sensor (9), for example "Hall sensor", which is configured to detect the magnetic field intensity variations occurring between the piston (6) and the magnet (8) depending on the movement of the piston (6) in the shock absorber (7), and
- a modular sensor unit (11) having a casing (10) which supports the magnet (8) and the magnetic sensor (9) and which enables the magnet (8) and the magnetic sensor (9) to be detachably mounted onto the outer surface of the shock absorber (7) as a single piece.

2. - A laundry washer-dryer (1) as in Claim 1, **characterized by** the sensor unit (11) which is configured to be detachably mounted to the cylindrical lateral surface of the shock absorber (7) by means of arc-shaped claws (12) provided on the casing (10).

3. - A laundry washer-dryer (1) as in Claim 1 or 2, **characterized by** the sensor unit (11) comprising an electronic card (13) which is configured to control the magnetic sensor (9) and which is placed into the casing (10) and the magnetic sensor (9) and/or the magnet (8) which is fixed onto the electronic card (13).

4. - A laundry washer-dryer (1) as in Claim 1 or 2, **characterized by** the sensor unit (11) comprising a plurality of magnets (8) which are placed onto the casing (10) in a successive and discrete manner parallel to the movement axis (E) of the piston (6).

5. - A laundry washer-dryer (1) as in Claim 4, **characterized by** the sensor unit (11) comprising the magnets (8) with same dimensions and same magnetic force which are arranged on the casing (10) at equal intervals.

6. - A laundry washer-dryer (1) as in Claim 4, **characterized by** the sensor unit (11) comprising the magnets (8) with different dimensions and/or different same magnetic force which are arranged on the casing (10) at equal intervals.

7. - A laundry washer-dryer (1) as in Claim 4, **characterized by** the sensor unit (11) comprising the magnets (8) which are arranged on the casing (10) at varying intervals.

8. - A laundry washer-dryer (1) as in Claim 4, **characterized by** the sensor unit (11) comprising at least one flux barrier (14) which is produced from non-magnetic material and which is placed into the gaps between the magnets (8) arranged on the casing (10).

## Patentansprüche

1. - Ein Wäschewaschtrockner (1) **umfasst** einen Körper (2); eine Trommel (3), in die die Wäsche geladen wird; eine Wanne (4), die so konfiguriert ist, dass sie im Betrieb durch die Wirkung der Trommel (3) eine Vibrationsbewegung ausführt; einen Motor (5), der an der Wanne (4) befestigt ist und zum Antreiben der Trommel (3) konfiguriert ist; wobei der Motor (5) und die Wanne (4) eine Wannen-Motor-Gruppe bilden; und mindestens einen Stoßdämpfer (7), der einen Kolben (6) umfasst, der zumindest teilweise aus magnetischem Material hergestellt ist und der an einem Ende mit der Wanne (4) oder dem Körper (2) verbunden ist, wobei der Stoßdämpfer (7 ) so konfiguriert ist, dass es die Vibrationsbewegung der Gruppe aus Wanne (4) und Motor (5) absorbiert, und wobei der Kolben (6) so konfiguriert ist, dass er sich koaxial bewegt,
**gekennzeichnet ist es dadurch, dass**
- mindestens ein Magnet (8) am Stoßdämpfer (7) parallel zur Bewegungsachse (E) des Kolbens (6) positioniert ist,
- ein Magnetsensor (9), beispielsweise ein "Hall-Sensor", der so konfiguriert ist, dass er die zwischen dem Kolben (6) und dem Magneten (8) auftretenden Änderungen der Magnetfeldstärke in Abhängigkeit von der Bewegung des Kolbens (6) in dem Stoßdämpfer (7) erfasst, und
- dass eine modulare Sensoreinheit (11) mit einem Gehäuse (10), das den Magneten (8) und den Magnetsensor (9) trägt und das es ermöglicht, den Magneten (8) und den Magnetsensor (9) abnehmbar an der Außenfläche des Stoßdämpfers (7) als ein einziges Stück zu montieren.

2. - Ein Wäschewaschtrockner (1), wie in Anspruch 1 aufgeführt, **ist dadurch gekennzeichnet, dass** die Sensoreinheit (11) mittels am Gehäuse (10) vorgesehener bogenförmiger Krallen (12) lösbar an der zylindrischen Mantelfläche des Stoßdämpfers (7) befestigt werden kann.

3. - Ein Wäschewaschtrockner (1), wie in Anspruch 1 oder 2 aufgeführt, **ist dadurch gekennzeichnet, dass** die Sensoreinheit (11) eine elektronische Karte (13) umfasst, die so konfiguriert ist, dass sie den Magnetsensor (9) steuert und die in das Gehäuse (10) eingesetzt ist, und den Magnetsensor (9) und/oder den Magneten (8), der auf der elektronischen Karte (13) befestigt ist.

4. - Ein Wäschewaschtrockner (1), wie in Anspruch 1 oder 2 aufgeführt, **ist dadurch gekennzeichnet, dass** die Sensoreinheit (11) eine Vielzahl von Magneten (8) umfasst, die nacheinander und diskret parallel zur Bewegungsachse (E) des Kolbens (6) auf dem Gehäuse (10) angeordnet sind.

5. - Ein Wäschewaschtrockner (1), wie in Anspruch 4 aufgeführt, **ist dadurch gekennzeichnet, dass** die Sensoreinheit (11) die Magnete (8) mit gleichen Abmessungen und gleicher Magnetkraft umfasst, die in gleichen Abständen am Gehäuse (10) angeordnet sind.

6. - Ein Wäschewaschtrockner (1), wie in Anspruch 4 aufgeführt, **ist dadurch gekennzeichnet, dass** die Sensoreinheit (11) die Magnete (8) mit unterschiedlichen Abmessungen und/oder unterschiedlicher gleicher Magnetkraft umfasst, die in gleichen Abständen am Gehäuse (10) angeordnet sind.

7. - Ein Wäschewaschtrockner (1), wie in Anspruch 4 aufgeführt, **ist dadurch gekennzeichnet, dass** die Sensoreinheit (11) die Magnete (8) umfasst, die in unterschiedlichen Abständen am Gehäuse (10) angeordnet sind.

8. - Ein Wäschewaschtrockner (1), wie in Anspruch 4 aufgeführt, **ist dadurch gekennzeichnet, dass** die Sensoreinheit (11) mindestens eine Flussbarriere (14) umfasst, die aus nichtmagnetischem Material hergestellt ist und die in die Lücken zwischen den am Gehäuse (10) angeordneten Magneten (8) eingesetzt wird.

## Revendications

1. -Une laveuse-sécheuse (1) **comprenant** un corps (2) ; un tambour (3) dans lequel le linge est chargé ; une cuve (4) configurée pour effectuer un mouvement vibratoire pendant le fonctionnement sous l'effet du tambour (3) ; un moteur (5) fixé à la cuve (4) et configuré pour entraîner le tambour (3) ; dans lequel le moteur (5) et la cuve (4) forment un groupe cuve-moteur ; et au moins un amortisseur (7) comprenant un piston (6) qui est au moins partiellement fabriqué à partir d'un matériau magnétique et qui est relié à la cuve (4) ou au corps (2) par une extrémité, dans lequel l'amortisseur (6) est connecté au tambour (3) par une extrémité ; et au moins un amortisseur (7) comprenant un piston (6) qui est au moins partiellement fabriqué à partir d'un matériau magnétique et qui est relié à la cuve (4) ou au corps (2) par une extrémité, dans lequel l'amortisseur (7) est configuré pour absorber le mouvement vibratoire du groupe cuve (4)-moteur (5) et dans lequel le piston (6) est configuré pour se déplacer de manière coaxiale, **caractérisé par**
- au moins un aimant (8) positionné sur l'amortisseur (7) parallèlement à l'axe de déplacement (E) du piston (6),
- un capteur magnétique (9), par exemple un " Capteur Hall ", configuré pour détecter les variations d'intensité du champ magnétique se produisant entre le piston (6) et l'aimant (8) en fonction du mouvement du piston (6) dans l'amortisseur de chocs (7), et
- une unité de capteur modulaire (11) comportant un boîtier (10) qui supporte l'aimant (8) et le capteur magnétique (9) et qui permet à l'aimant (8) et au capteur magnétique (9) d'être montés de manière amovible sur la surface extérieure de l'amortisseur de chocs (7) en une seule pièce.

2. - Une laveuse-sécheuse (1) selon la déclaration 1, **caractérisée par** l'unité de détection (11) qui est configurée pour être montée de manière amovible sur la surface latérale cylindrique de l'amortisseur (7) au moyen de griffes (12) en forme d'arc de cercle prévues sur le boîtier (10).

3. - Une laveuse-sécheuse (1) selon la déclaration 1 ou 2, **caractérisée par** l'unité de détection (11) comprenant une carte électronique (13) configurée pour commander le capteur magnétique (9) et placée dans le boîtier (10) et le capteur magnétique (9) et/ou l'aimant (8) qui est fixé sur la carte électronique (13).

4. - Une laveuse-sécheuse (1) selon les déclarations 1 ou 2, **caractérisée par** l'unité de détection (11) comprenant une pluralité d'aimants (8) qui sont placés sur l'enveloppe (10) de manière successive et discrète parallèlement à l'axe de déplacement (E) du piston (6).

5. - Une laveuse-sécheuse (1) selon la déclaration 4, **caractérisée par** l'unité de détection (11) comprenant les aimants (8) de mêmes dimensions et de même force magnétique qui sont disposés sur le boîtier (10) à intervalles égaux.

6. - Une laveuse-sécheuse (1) selon la déclaration 4, **caractérisée par** l'unité de détection (11) comprenant les aimants (8) de dimensions différentes et/ou de même force magnétique différente qui sont disposés sur le boîtier (10) à intervalles égaux.

7. - Une laveuse-sécheuse (1) selon la déclaration 4, **caractérisée par** l'unité de détection (11) comprenant les aimants (8) qui sont disposés sur l'enveloppe (10) à des intervalles variables.

8. - Une laveuse-sécheuse (1) selon la déclaration 4, **caractérisée par le fait que** l'unité de détection (11) comprend au moins une barrière de flux (14) qui est fabriquée à partir d'un matériau non magnétique et qui est placée dans les espaces entre les aimants (8) disposés sur le boîtier (10).
